(19) Europäisches Patentamt
European Patent Office
Office européen des brevets

(11) Publication number: 0 387 434 A1

(12) **EUROPEAN PATENT APPLICATION**

(21) Application number: 89302572.6

(22) Date of filing: 15.03.89

(51) Int. Cl.5: B03C 3/14, B03C 3/60, B03C 3/00, F01N 3/02

Amended claims in accordance with Rule 86 (2) EPC.

(43) Date of publication of application: 19.09.90 Bulletin 90/38

(84) Designated Contracting States: DE FR GB IT

(71) Applicant: Research Development Corporation of Japan
5-2, Nagatacho 2-chome
Chiyoda-ku Tokyo(JP)

(72) Inventor: Yanagawa, Motoo
29-24, Tsurumaki 3-chome, Setagaya-ku
TOKYO(JP)

(74) Representative: Howden, Christopher Andrew et al
FORRESTER & BOEHMERT
Widenmayerstrasse 4/I
D-8000 München 22(DE)

(54) **Dust collecting element for electrostatic dust collector, and electrostatic dust collecting method using said element.**

(57) A dust collecting element for an electrostatic dust collector is obtained by depositing a reactive material (11) on a base material (10), which is composed of fine metallic fibers, by an electron-beam deposition method or sol gel method. The reactive material is formed by depositing a metal belonging to the I through VIII groups, and/or an oxide, nitride or halide of the metal, on steel wool, by way of example. A dust collecting method using this dust collecting element includes steps of applying an electrostatic field to the element, passing a gas to be treated through the dust collecting element, and purifying the gas by causing the reactive material to perform a catalytic action on and/or react with a specific component contained in the gas.

EP 0 387 434 A1

# Dust collecting element for electrostatic dust collector, and electrostatic dust collecting method using said element

THIS INVENTION relates to an electrostatic dust collector and, more particularly, to a dust collecting element for such a dust collector, as well as an electrostatic dust collecting method using the dust collecting element.

An example of the prior art pertaining to this technical field is US-A-4662903. The construction of this example of the prior art will now be described with reference to Figure 1, which shows the construction of a principal portion of an electrostatic dust collector according to the prior art.

Referring to Figure 1, a ceramic 5 serving as a solid insulator is provided about a first electrode 3 to which a positive DC high voltage is applied. A second electrode 4 to which a negative potential is applied is so provided as to sandwich the ceramic 5 between itself and the first electrode 3. The first electrode 3, second electrode 4 and ceramic 5 thus arranged constitute an electrode unit. The leading edge portion of the second electrode 4, namely the edge on the intake side of the apparatus, is located inwardly of the leading edge portion of the first electrode 3. The reason for this arrangement is to produce an edge effect on the intake side. The edge effect sets up an electric field at this portion of the apparatus to guide floating particles into a filter element 7, described below.

A gas passageway 6 for a gas to be purified, such as air, is defined between two electrode units constructed as set forth above. Arranged in the passageway 6 is a filter element 7, which comprises fibers consisting of extremely fine strands of a metal. Examples of the fibers used are steel wool, aluminum wool, copper wool, etc.

When air 1 containing floating particles enters the passageway 6, the particles are guided to the filter element 7 by the electric field produced at the leading edge portion of the above-described electrode unit. When the floating particles reach the filter element 7, those positively charged contact the second electrode 4, to which the negative potential is applied, and are acted upon by Coulomb's force and trapped by the fine fibers constituting the filter element 7. This is the result of an electrostatic induction effect among the metallic fine fibers that present a large surface area in the filter element 7, which is held at a negative potential. In addition, the influx of floating particles is constricted when passing through the narrow voids of the fine pores in the negative electrode formed by the mesh-like filter element 7, and the particles are caused to repeatedly collide with and contact one another, during which time they are charged. The particles eventually are trapped on the metal fibers of the filter element 7 by Coulomb's force. The trapped particles are held-affixed by an electric charge supplied by the second electrode 4. Purified air 2 is discharged from the dust collector.

Though the above-described dust collector is effective, there is demand for an improved dust collector capable of dealing with a wide variety of dust-containing gases discharged in a modern society, examples of these gases being the exhaust gases from automotive vehicles, smoke from factories and exhaust gases from household appliances using gas.

Accordingly, an object of the present invention is to improve upon the filter element of the above-described electrostatic dust collector to obtain a dust collecting element suited to a gas to be treated, and to provide an electrostatic dust collecting method which, by making use of the improved element, exhibits a high dust collecting efficiency.

According to the present invention, the foregoing object is attained by providing a dust collecting element for an electrostatic dust collector, the dust collecting element comprising a base material consisting of fine metallic fibers, and a reactive material deposited on the base material. A gas to be treated is passed through the dust collecting element to remove a toxic substance contained in the gas.

Embodiments of the invention are described below by way of example, with reference to the accompanying drawings, in which like reference characters designate the same or similar parts throughout the figures thereof, and in which:-

FIGURE 1 is a view showing the construction of a principal portion of an electrostatic dust collector according to the prior art;

FIGURE 2 is a schematic view showing the constitution of dust collecting element embodying the present invention;

FIGURE 3 is a sectional view illustrating an apparatus for manufacturing the dust collecting element of Figure 2;

FIGURE 4 is a sectional view of an electrostatic dust collector incorporating a dust collecting element embodying the present invention;

FIGURE 5 is an exploded perspective view of the electrostatic dust collector shown in Figure 4;

FIGURE 6 is a perspective view of a dust collecting element embodying the invention;

FIGURE 7 is a perspective view illustrating a second embodiment of a dust collecting element;

FIGURE 8 is a perspective view illustrating a third embodiment of a dust collecting element, and

FIGURE 9 is a perspective view illustrating a fourth embodiment of a dust collecting element.

As shown in Figure 2, a dust collecting element embodying the present invention includes fine metallic fibers 10, such as steel wool, and a reactive material 11 deposited on the fibers 10 by a method described below. As set forth below, a metal or semiconductor which exhibits a catalytic action with respect to a toxic substance contained in a gas to be treated, and/or which reacts with the toxic substance, is selected as the reactive material 11.

A method of manufacturing the dust collecting element of Figure 2 is illustrated in Figure 3.

As shown in Figure 3, a high-frequency electrode 17 is provided between a vacuum deposition-type vapor source 15 and an electrode 16 within a chamber 12, and fine fibers 10 made of metal (e.g. steel, copper, aluminium or the like) are set above the high-frequency electrode 17. A negative DC high voltage is applied to the electrode 16, a rare gas is fed into the chamber 12 and a high-frequency field is applied to produce a high-frequency discharge. Particles from the vapor source 15 become ionized by the electromagnetic field produced by the high-frequency electrode 17 or by colliding with the gas ionized by the high-frequency discharge. The resulting ionized particles are accelerated by the negative DC high voltage applied to the electrode 16 and form the reactive material 11 (see Fig. 2) on the fine metallic fibers 10.

It will suffice if the reactive material 11 is formed on a portion of each of the fine metallic fibers 10. The degree to which the reactive material 11 and fine metallic fibers 10 coexist can be adjusted depending upon the high-frequency field or the magnitude of the DC high voltage applied to the electrode 16.

The reactive material 11 is thus formed by electron beam deposition.

The sol gel method can be applied to the manufacture of the dust collecting element of the invention. Specifically, a metal alkoxide (a compound of a metal and alcohol) may be dissolved in a suitable solvent, such as water or alcohol, and the resulting solution is deposited on the fine metallic fibers 10 and allowed to dry. If desired, the deposited material can be fixed by calcination. The end result is the reactive material 11. In this case, aluminum, vanadium, titanium, tin, zirconium or the like can be used as the metal in the metal alkoxide.

In Fig. 3, numeral 13 denotes an electron gun, and 14 an electron beam.

The dust collecting element thus obtained by depositing the reactive material 11 on the fine metallic fibers 10 is mounted in an electrostatic dust collector shown in Figs. 4 through 6 to remove toxic substances contained in a gas to be treated.

In Figs. 4 through 6, numeral 20 denotes the first electrode to which the positive DC high voltage is applied, 21 the second electrode to which the negative voltage is applied, and 22 the ceramic serving as the solid insulator enclosing the first electrode 20. The electrodes 20, 21 and the ceramic 22 construct an electrode unit. The leading edge portion of the second electrode 21 in the electrode unit is arranged at a position inwardly of the leading edge portion of the first electrode 20, as mentioned earlier. Numeral 23 denotes a side plate, 24 a gas passageway, 25 a dust collecting element according to the invention installed in the passageway 24, 26 a prefilter for trapping coarse dust particles in order to prevent clogging of the dust collecting element 25, 27 a rear filter, which serves also as a holder for an activated carbon filter 28, which is attached to the rear filter 27, 29 a case body, 30 a stopper, 31 a grill, 32 a fan, and 33 an outflow port.

Air or any other gas containing floating particles is drawn in through the grill 31 at the intake port by the fan 32 and reaches the dust collecting unit via the prefilter 26. The dust collecting unit comprises a plurality of the electrode units, each of which includes the first electrode 20 to which the positive potential is applied, the second electrode 21 to which the negative potential is applied, and the ceramic 22 formed between these two electrodes, the dust collecting element 25 disposed in the gas passageway 24 formed between the electrode units, the rear filter 27 at the end of the passageway 24, and the activated carbon filter 28. As shown in Fig. 6, the dust collecting element 25 is shaped beforehand to conform to the configuration of the gas passageway 24 (see Fig. 4) and need only be inserted into the passageway 24. The thus assembled dust collecting unit inclusive of the dust collecting element 25 is installed in the case body 29 by being pushed in from the intake port of grill 31 until it abuts against the stopper 30 located within the case body 29. The fan 32 and the outflow port 33 for the purified air are provided in the rear portion of the case body 29 in back of the filter 28.

In operation, air or any other gas containing floating particles is drawn in through the grill 31 at the intake port by the fan 32. The coarse particles are trapped by the prefilter 26. The finer particles that pass through prefilter 26 are acted upon by the electric field at the leading edge portions of the electrodes 20, 21 to be guided into the dust collecting element 25, which is held at the negative potential. As a result of the

above-described dust collecting action, the entrant particles are trapped by the multiplicity of fine metallic fibers, which present a large surface area within the negatively charged dust collecting element 25, and which coexist with the reactive material exhibiting the catalytic action and/or reactivity. Air thus purified is deodorized by the activated carbon filter 28 before being blown out of the outflow port 33.

In the foregoing embodiment, a positive potential is applied to the first electrode and a negative potential is applied to the second electrode. However, it is permissible to adopt an arrangement in which the negative potential is applied to the first electrode and the positive potential to the second electrode. Further, though a single reactive material is deposited on the fine metallic fibers to form the dust collecting element, the element can be constructed in a number of other ways, as will now be described.

(1) A plurality of types of reactive material can be deposited on the fine metallic fibers to obtain the dust collecting element.

For example, as shown in Fig. 7, a dust collecting element 40 can be obtained by depositing a first reactive material 42 and a second reactive material 43 on a fine metallic fiber 41.

(2) A layered-type dust collecting element can be obtained comprising fine metallic fibers having different reactive materials deposited thereon.

For example, as shown in Fig. 8, a dust collecting element 50 can be obtained by stacking a layer 51, which comprises fine fibers having a reactive material A deposited thereon, and a layer 52, which comprises fine fibers having a reactive material B deposited thereon.

In this case, the arrangement of the dust collecting element 50 is such that a gas to be treated can be passed through the element from the X direction or from the Y direction. Further, the thicknesses of the layers 51, 52 can be suitably selected depending upon the gas to be treated.

(3) A dust collecting element can be obtained by blending fine metallic fibers having different reactive materials deposited thereon.

For example, as shown in Fig. 9, a dust collecting element 60 can be obtained by blending fine fibers 61 having a reactive material A deposited thereon, and fine fibers 62 having a reactive material B deposited thereon.

With such an arrangement, highly efficient toxic substance removal can be achieved with regard to gases containing a plurality of toxic substances by providing a dust collector with a dust collecting element having a combination of plural reactive materials corresponding to the toxic substances.

An electrostatic dust collecting method which uses the dust collecting element of the invention to treat various gases will now be described.

In order to effectively reduce such emissions as $NO_x$, $SO_x$ and CO from automobile exhaust gas and the like, it is necessary to take into account the fact that such exhaust gas is at a high temperature (400°C or more). In addition, since an automobile is, by definition, mobile, the dust collector must be compact, light in weight and operate in accordance with a dry-type method.

Furthermore, since the reactive material (catalyst) is disposable, it should be inexpensive and have a lifetime approximately the same as that of the fine metallic fibers. Though the reactive material usually is mixed into a single stage, it can also be used in a number of stages.

Accordingly, a system is adopted in which exhaust gas is fed, along which a large amount of secondary air, into the fine metallic fibers equipped with the reactive material and having the electrostatic field applied thereto.

More specifically, the following reactions are made to take place with regard to the substances indicated:

$$CO \xrightarrow{O_2} CO_2$$

$$SO_2 \xrightarrow{O_2} SO_3 \xrightarrow{H_2O} H_2SO_4 \longrightarrow \text{metallic salts}$$

$$NO \xrightarrow{O_2} NO_2 \xrightarrow{H_2O} HNO_3 \longrightarrow \text{metallic salts}$$

In a case where a plurality of reactive substances coexist, a complicated reaction state is obtained by the catalytic action and/or reaction among them. This will be described in further detail.

(1) To remove CO by the dry method, we have

$CO \rightarrow CO_2$

In this case, examples of the catalyst are $SnO_x$, $MnO_x$, $CoO_x$, $MoO_x$, $PbO_x$, $AgO_x$ and $CuO_x$.

If this method is practiced in the presence of $O_2$, it will suffice to use an element in which the above-mentioned metals are employed and a large surface area is provided. The metals Cu, Ag, Co are especially suitable.

(2) To remove NO by the dry method, we have the reactions

$NO \rightarrow NO_2 \rightarrow HNO_3$

and

$NO \rightarrow N_2$

Though the latter reaction is preferred, difficulties are encountered in achieving the reaction. Accordingly, chromate, permanganate or hypochlorous acid is used.

If $SO_2$ is present in the foregoing reaction, the reaction becomes

$NO + SO_2 \rightarrow SO_3 + N_2$

If the reaction takes place at 1000°C in the presence of Pt, we have

$NO + CO \rightarrow CO_2 + N_2$

If such a catalyst is used, a Pt(9)•Rh(1) system or Pt(92.5)•Rh(3.5) system would be used in an automobile.

Hg or Pb can be used to absorb $NO_2$, giving a nitrate. Nitrates are obtained also with Co, Ni or Cu, so that $NO_2$ can be absorbed.

Here oxides or nitrates of the metals of the VIII group, Cu, V, Ti and Cr are used.

(3) To remove $SO_2$ by the dry method, we have the reactions

$SO_2 \rightarrow SO_3 \rightarrow H_2SO_4$

and

$SO_2 \rightarrow S$

Though the latter reaction is preferred, difficulties are encountered in achieving the reaction. Accordingly, an Mn, Cu, V, Pt, $V_2O_5$ - $K_2O$ (or $Na_2O$) system (where $SiO_2$ is the carrier) is used as the catalyst of the $SO_2 \rightarrow S$ reaction.

The reaction of Cu on an alumina carrier is as follows:

$$Cu \xrightarrow{O_2} CuO \xrightarrow{SO_2+O_2} CuSO_4$$

Though manganese oxide or activated carbon generally is used as the catalyst in the above reaction, the activated carbon exhibits an adsorbing action, so that regeneration will be necessary.

In the foregoing description, the reactions are for a case where only one specific component is contained in the gas to be treated. In actuality, however, a gas to be treated usually contains a plurality of components, in which case a number of reactions would naturally take place in combination.

For a gas having a number of components in combination, it is highly effective to employ a dust collecting element in which a plurality of reactive materials coexist, as described above.

In accordance with the present invention as described in detail above, the following advantages are obtained:

(1) Components such as $NO_x$, $SO_x$ and CO can be effectively removed.

(2) Various dust collecting elements can be provided and the one best suited to the gas to be purified can be selected to enable purification of this gas.

(3) The dust collecting element is easy and inexpensive to manufacture.

(4) The dust collecting element is easy to replace, and the element that has been replaced can be treated with ease.

Further, the present invention is capable of contributing to purification of exhaust gases from automotive vehicles, smoke from factories and exhaust gases from combustion-type gas appliances for household use. In addition, since the dust collector can be made small in size and light in weight, it is highly suitable as a portable dust collector for workers employed in industries where the atmosphere contains exhaust gases in high concentration.

As many apparently widely different embodiments of the present invention can be made without departing from the spirit and scope thereof, it is to be understood that the invention is not limited to the specific embodiments thereof except as defined in the appended claims.

The features disclosed in the foregoing description, in the following claims and/or in the accompanying drawings may, both separately and in any combination thereof, be material for realising the invention in diverse forms thereof.

## Claims

1. A dust collecting element for an electrostatic dust collector, comprising:
a base material consisting of fine metallic fibers; and
a reactive material deposited on the base material for removing a toxic substance.

2. The dust collecting element according to claim 1, wherein said reactive material is formed by electron-beam deposition.

3. The dust collecting element according to claim 1, wherein said reactive material is formed by a sol gel method.

4. The dust collecting element according to claim 1, 2 or 3, wherein said reactive material is a metal belonging to groups I through VIII.

5. The dust collecting element according to claim 1, 2 or 3, wherein said reactive material is a semiconductor.

6. The dust collecting element according to claim 1, wherein said reactive material comprises an oxide, nitride or halide of a metal belonging to groups I through VIII.

7. The dust collecting element according to claim 1, wherein said reactive material comprises an oxide, nitride or halide of a semiconductor.

8. The dust collecting element according to claim 1, wherein said reactive material comprises plural types of reactive materials.

9. A dust collecting element for an electrostatic dust collector, comprising:
fine metallic fibers in combined form; and various reactive materials deposited on each of said fine metallic fibers.

10. The dust collecting element according to claim 9, wherein said fine metallic fibers each having the various types of reactive material deposited thereon are stacked in layers.

11. The dust collecting element according to claim 9, wherein said fine metallic fibers each having the various types of reactive material deposited thereon are blended.

12. An electrostatic dust collecting method comprising the steps of:
applying an electrostatic field to a dust collecting element, which comprises a base material consisting of fine metallic fibers, and a reactive material deposited on the base material;
passing a gas, from which dust is to be collected, through said dust collecting element; and
purifying said gas by causing said reactive material to perform a catalytic action on and/or react with a specific component contained in said gas.

13. The method according to claim 12, wherein said specific component is $NO_x$.

14. The method according to claim 12, wherein said specific component is $SO_x$.

15. The method according to claim 12, wherein said specific component is CO.

16. The method according to claim 12, wherein said gas from which dust is to be collected is exhaust gas from an automotive vehicle.

17. The method according to claim 12, wherein said gas from which dust is to be collected is smoke from factory.

18. The method according to claim 12, wherein said gas from which dust is to be collected is exhaust gas from a combustion-type gas appliance.

Amended claims in accordance with Rule 86(2) EPC.

1. A dust collecting element for an electrostatic dust collector, comprising:
a base material consisting of fine metallic fibers; and
a reactive material consisting of inorganic matter deposited on the base material for removing a toxic substance.

2. The dust collecting element according to claim 1, wherein said reactive material is formed by electron-beam deposition.

3. The dust collecting element according to claim 1, wherein said reactive material is formed by a sol gel method.

4. The dust collecting element according to claim 1, 2 or 3, wherein said reactive material is a metal belonging to groups I through VIII.

5. The dust collecting element according to claim 1, 2 or 3, wherein said reactive material is a semiconductor.

6. The dust collecting element according to claim 1, wherein said reactive material comprises an oxide, nitride or halide of a metal belonging to groups I through VIII.

7. The dust collecting element according to claim 1, wherein said reactive material comprises an oxide, nitride or halide of a semiconductor.

8. The dust collecting element according to claim 1, wherein said reactive material comprises plural types of reactive materials.

9. A dust collecting element for an electrostatic dust collector, comprising:
fine metallic fibers in combined form; and various reactive materials deposited on each of said fine metallic fibers.

10. The dust collecting element according to claim 9, wherein said fine metallic fibers each having the various types of reactive material deposited thereon are stacked in layers.

11. The dust collecting element according to claim 9, wherein said fine metallic fibers each having the various types of reactive material deposited thereon are blended.

12. An electrostatic dust collecting method comprising the steps of:
applying an electrostatic field to a dust collecting element, which comprises a base material consisting of fine metallic fibers, and a reactive material consisting of inorganic matter deposited on the base material;
passing a gas, from which dust is to be collected, through said dust collecting element; and
purifying said gas by causing said reactive material to perform a catalytic action on and/or react with a specific component contained in said gas.

13. The method according to claim 12, wherein said specific component is $NO_x$.

14. The method according to claim 12, wherein said---

Fig. 1
(PRIOR ART)

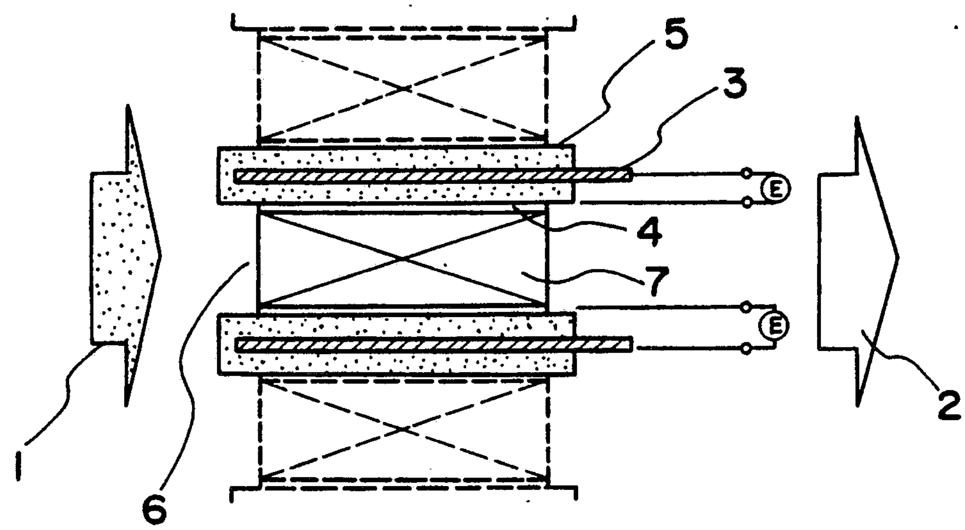


Fig. 2

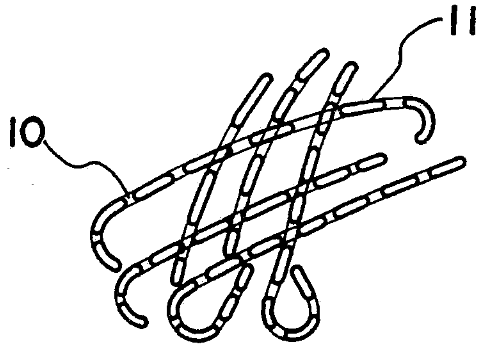

Fig. 3

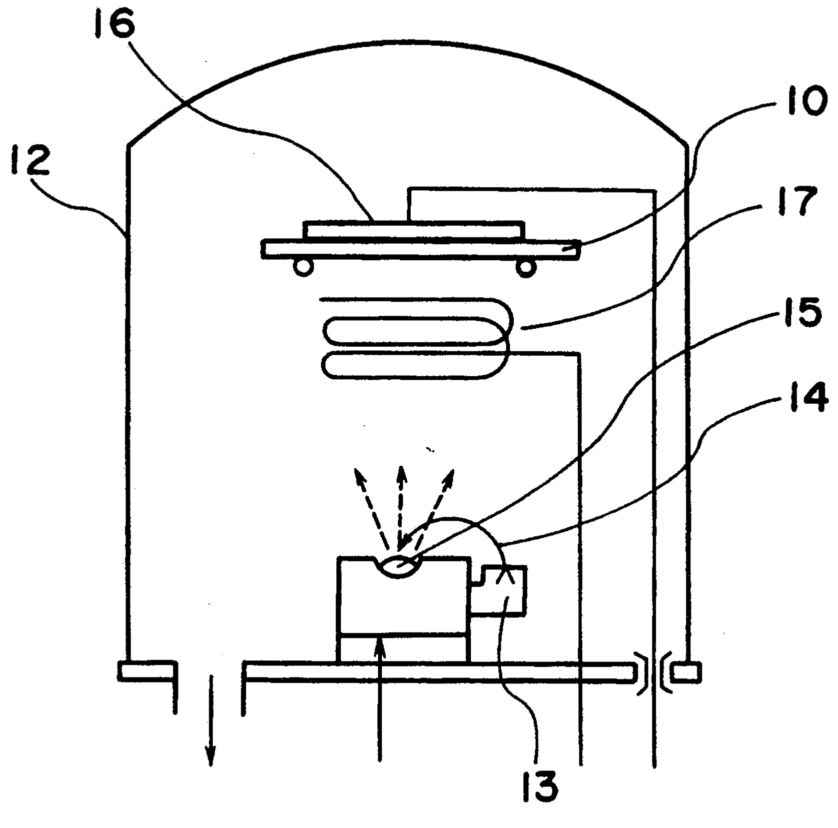

Fig.4

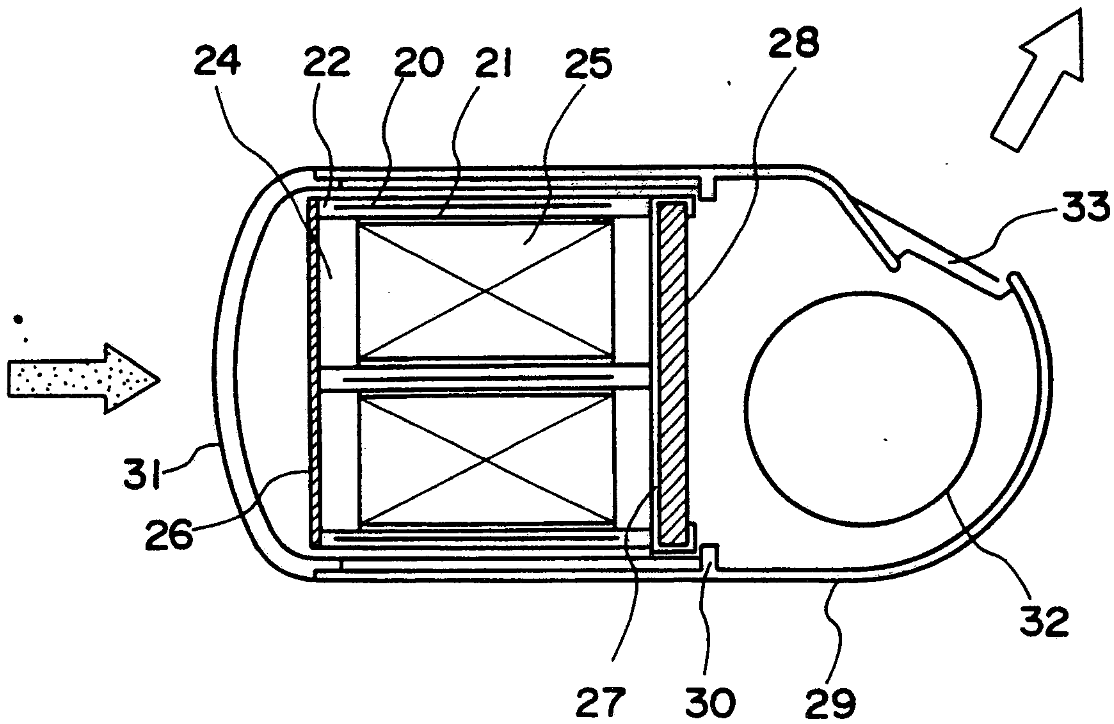

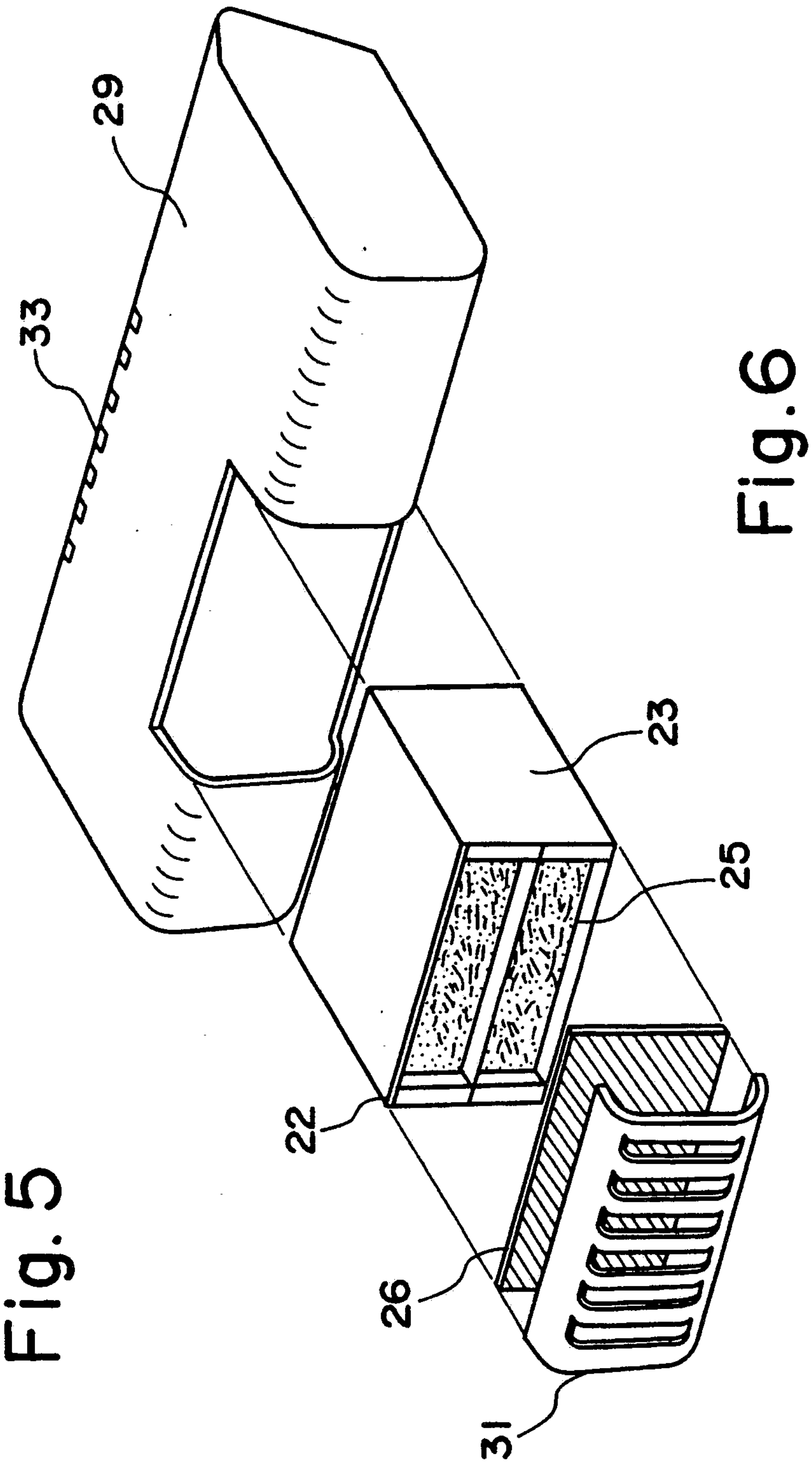


Fig. 5

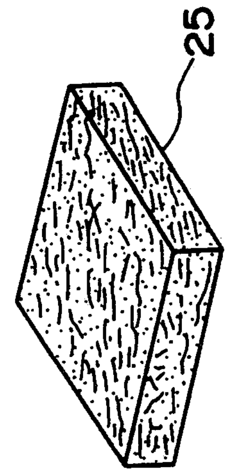


Fig.6

Fig.7

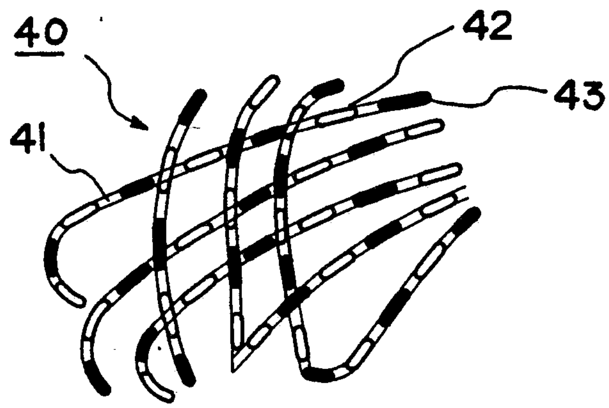


Fig.8

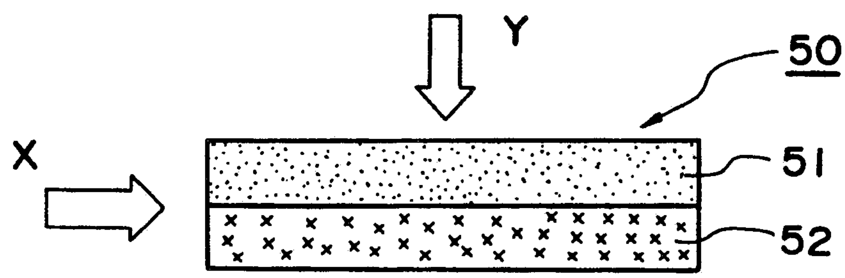


Fig.9

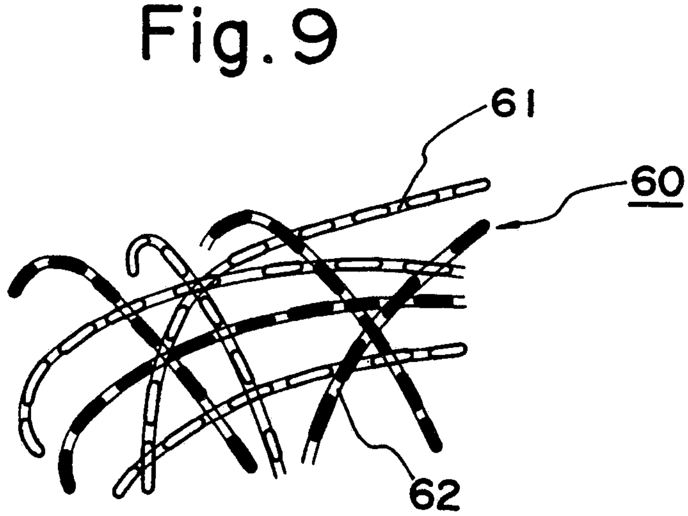

European Patent Office

# EUROPEAN SEARCH REPORT

Application Number

EP 89 30 2572

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 352 668 (CANON K.K.)<br>* Claims 1,4,5; page 1, paragraph 1 - page 2, paragraph 2; page 6, paragraph 3 - page 7, paragraph 2; page 10, paragraph 4; figures 1,7,8 * | 1,4,5, 12-15 | B 03 C 3/14<br>B 03 C 3/60<br>B 03 C 3/00<br>F 01 N 3/02 |
| Y | EP-A-0 248 925 (DENKI KOGYO CO., LTD)<br>* Claims 1,7; column 8, lines 9-13; column 9, lines 30-35 * & US-A-4 662 903 (Cat. D) | 1,12,13 | |
| A | | 4,14 | |
| Y | DE-U-8 801 100 (P. HAUFE)<br>* Claims 1,6,8,10,13; page 3, line 16 - page 4, line 29; page 7, paragraph 1 * | 1,12,13 | |
| A | | 2,9,11, 15,16 | |
| A | EP-A-0 178 698 (METALLGESELLSCHAFT AG)<br>* Claims 1,2 * | 1,13 | |
| A | DE-C- 346 235 (P. KIRCHHOFF)<br>* Claim 1 * | 1,5 | **TECHNICAL FIELDS SEARCHED (Int. Cl.5)**<br>B 03 C |
| E | PATENT ABSTRACTS OF JAPAN, vol. 13, no. 286 (C-613)[3634], 29th June 1989; & JP-A-1 80 454 (RES. DEV. CORP. OF JAPAN) 27-03-1989<br>* Abstract * | 1-4,6,8,9,11, 12 | |

The present search report has been drawn up for all claims

| Place of search | Date of completion of the search | Examiner |
|---|---|---|
| THE HAGUE | 02-11-1989 | DECANNIERE L.J. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document